# EUROPÄISCHE PATENTSCHRIFT

(11) **EP 1 490 522 B1**
(45) Veröffentlichungstag und Bekanntmachung des Hinweises auf die Patenterteilung: **10.08.2005**
(21) Anmeldenummer: 03704680.2
(22) Anmeldetag: 22.02.2003
(51) Int. Cl.: C21C 5/36, C21C 7/00, C21C 5/00

(54) **VERFAHREN ZUR BEHANDLUNG VON LEGIERTEN KOHLENSTOFFHALTIGEN EISENSCHMELZEN ZUR HERSTELLUNG VON STAHL**
METHOD FOR TREATING ALLOYED CARBONIC IRON SMELTS USED FOR THE PRODUCTION OF STEEL
PROCEDE DE TRAITEMENT DE BAINS DE FER EN FUSION ALLIES CONTENANT DU CARBONE, EN VUE DE LA PRODUCTION D'ACIER

(30) Priorität: 28.03.2002 DE 10213967
(43) Veröffentlichungstag der Anmeldung: 29.12.2004
(73) Patentinhaber: SMS Demag Aktiengesellschaft, 40237 Düsseldorf (DE)
(72) Erfinder: LEMKE, Stefan, 58452 Witten (DE); REICHEL, Jan, 40489 Düsseldorf (DE); GÖTZINGER, Karl-Reiner, 47445 Moers (DE)
(74) Vertreter: Valentin, Ekkehard, Dipl.-Ing.
(86) Internationale Anmeldenummer: PCT/EP2003/001814
(87) Internationale Veröffentlichungsnummer: WO 2003/083144

(56) Entgegenhaltungen:
- PATENT ABSTRACTS OF JAPAN vol. 1996, no. 08, 30. August 1996 (1996-08-30) -& JP 08 085815 A (NIPPON STEEL CORP), 2. April 1996 (1996-04-02)
- PATENT ABSTRACTS OF JAPAN vol. 1997, no. 07, 31. Juli 1997 (1997-07-31) -& JP 09 087720 A (KAWASAKI STEEL CORP), 31. März 1997 (1997-03-31)
- PATENT ABSTRACTS OF JAPAN vol. 1995, no. 11, 26. Dezember 1995 (1995-12-26) -& JP 07 216429 A (NIPPON STEEL CORP), 15. August 1995 (1995-08-15)

## Beschreibung

Die Erfindung betrifft ein Verfahren zur Behandlung von legierten kohlenstoffhaltigen Eisenschmelzen zur Herstellung von Stahl, wobei in einem metallurgischen Gefäß eine kohlenstoffhaltige Eisenschmelze einer Entkohlung durch Zugabe von Sauerstoff ausgesetzt wird und eine Teilmenge der metallischen Legierungselemente verschlackt, wobei die Metallschmelze aus dem metallurgischen Gefäß abgezogen wird, währenddessen die Schlacke unreduziert im metallurgischen Gefäß verbleibt und anschließend das metallurgische Gefäß mit einer neuen Charge Eisenschmelze befüllt wird und erneut ein Entkohlungsprozess durchgeführt wird.

Die Herstellung von nichtrostenden Chrom- und Chrom-Nickel-Stählen findet üblicherweise in einer zweistufigen Metallurgie statt. Zunächst wird chromhaltiger Schrott im Elektrolichtbogenofen eingeschmolzen und anschließend in ein weiteres Gefäß chargiert, um dort auf die gewünschte Zusammensetzung gefrischt und legiert zu werden. Bei den bekannten Konverterprozessen zur Herstellung von hochchromhaltigen Stählen, wie AOD (Argon-Oxygen-Decarburization) bzw. AOD-L (mit Lanze), MRP (Metall Refining Process) bzw. MRP-L (mit Lanze), CLU oder ASM wird die prinzipielle Reaktion der Entkohlung in einem Mehrstoffsystem durchgeführt, wobei die Reduktion des Chromoxids mit Kohlenstoff neben der Direktreduktion des Kohlenstoffs den grundsätzlichen Mechanismus darstellt. Nach der Oxidation des Chroms wird das Chromoxid durch den in der Schmelze gelösten Kohlenstoff reduziert, wobei das entstehende Kohlenmonoxid in die Gasatmosphäre oberhalb der Schmelze abgeführt wird.

Wegen der Unvollständigkeit dieser Chromreduktion während der Entkohlung gelangt eine Teilmenge des Chromoxids in Form von verschiedenen Spinellen in die Schlacke. Der Reduktionseffekt wird mit fortlaufender Entkohlung abgeschwächt, da der Gehalt an Kohlenstoff als Reduktionselement mit der Zeit abnimmt.

Die Wirtschaftlichkeit der Prozesse beruht darauf, das Chromoxid aus der Schlacke für die Metallschmelze zurückzugewinnen. Nach konventionellen Prozessen wird hierzu am Ende jedes Entkohlungsprozesses bzw. jedes Sauerstoff-Blasvorgangs die Reduktion der Schlacke mit Silizium-Trägem durchgeführt. Der Schmelze wird bespielsweise hochaffines Silizium in Form von FeSi zugesetzt, um unter starkem Rühren das Chromoxid der Schlacke zu reduzieren. Der Chromgehalt des Metallbades steigt dann wieder an.

Um ein solches Verfahren zu vereinfachen und damit wirtschaftlicher zu machen, schlägt die WO 00/79014 zur Rückgewinnung von metalischem Chrom aus Chromoxid enthaltenden Schlacken vor, die am Ende eines Blas- oder Behandlungsvorgangs in einem Konverter oder einer Vakuumanlage angefallene Schlacke unreduziert abzustechen und die Schlacke in einen Elektroofen zu chargieren. Dieser Elektroofen wird zusätzlich mit einer Charge aus Schrott und ggfs. Reststäuben gefüllt; des weiteren werden Kohlenstoff und ggfs. Silizium zugegeben. Während des Einschmelzens der Charge wird das Chromoxid in der Schlacke durch den zugegebenen Kohlenstoff und das Silizium direkt zu metallischem Chrom reduziert. Der konventionelle Behandlungsschritt der Schlackenreduktion unmittelbar nach dem ersten Schmelzvorgang wird unterlassen.

Aus der JP 9184007 ist eine Behandlungsmethode einer Schmelze eines rostfeien Stahls unter Verwendung einer chromreichen Schlacke beschrieben. Hierzu wird geschmolzenes Roheisen in ein Gefäß mit verbliebener chromhaltiger Schlacke aus der vorherigen Charge gegeben und anschließend mit Sauerstoff geblasen. Das Chromoxid der Schlacke wird durch Kohlenstoff reduziert und geht als metallisches Chrom in die Schmelze über. Anschließend erfolgt ein Zwischenabschlacken und ein erneuter Blasvorgang auf das Roheisen, wobei erneute Schlacke entsteht. Anschließend wird der Stahl abgestochen, und die Schlacke verbleibt für die nächste Chargierung im Behandlungsgefäß.

Der Erfindung liegt die Aufgabe zugrunde, ein Verfahren zur Behandlung von legierten kohlenstoffhaltigen Eisenschmelzen zur Herstellung von Stahl so weiterzuentwickeln, dass bei der Entkohlung der Verlust an den metallischen - teuren - Legierungselementen durch Verschlackung gering ist. Insbesondere soll die Verschlackung von Chrom bei chromhaltigen Schmelzen minimiert werden und der Rückgewinnungsgrad an metallischem Chrom hoch sein.

Diese Aufgabe wird durch das Verfahren mit den Merkrnalen des Anspruchs 1 gelöst. Vorteilhafte Weiterentwicklungen sind in den Unteransprüchen beschrieben.

Erfindungsgemäß wird ohne Zwischenabschlacken die Schlacke mit den Metalloxiden, die während mindestens drei bis vier hintereinander ablaufender Eni kohlungsprozesse der Schmelze anfallen, gesättigt wird, wodurch aufgrund des zunehmenden Anteils an Metalloxiden in der Schlacke der Verschlackung der metallischen Legierungselemente zunehmend entgegengewirkt wird. Die Behandlung findet ohne Zwischenabschlacken der Schlacke statt, die sich über mehrere Chargen an Roheisen und mehreren Abstichen an Stahlschmelze, ansammelt. Da kein Zwischenabschlacken stattfindet, steigt die Konzentration der Metalloxide in der Schlacke, wobei eine zunehmende Konzentration einer Verschlackung mehr und mehr entgegenwirkt, d.h. die Tendenz zur Metalloxidation sinkt. Hierbei reichert sich die Schlacke pro Entkohlungsprozess nicht proportional an Metalloxiden an, sondern es wird vorteilhaft immer weniger pro Entkohlungsprozess verschlackt. Bei vollständiger Sättigung der Schlacke an Metalloxiden ist eine weitere Verschlackung unterbunden.

Erst nachdem der Sättigungsgrad oder ein annähemder Sättigungsgrad der Schlacke erreicht ist, wird die Schlacke reduziert und anschließend abgeschlackt. Während der Entkohlungsprozesse wird die Schlacke mit der Schmelze stark vermischt, was die Reaktionen begünstigt.

Insgesamt werden durch das vorgeschlagene Verfahren die Metalloxidation minimiert und metallische Legierungselemente mit hohem Wirkungsgrad zurückgewonnen, d.h. die Metallausbringung der Stahlschmelze ist hoch.

Des weiteren ergeben sich folgende Vorteile:
- Verkürzung der gesamten Behandlungszeit einer Schmelze bis zu 15-20 min je nach Technologieart (AOD, MRP etc.), da nicht pro Schmelze abgeschlackt wird;
- Senkung des FeSi-Verbrauchs, da erst nach mehreren Schmelzen die gesamt hoch mit Metalloxiden angereicherte Schacke reduziert wird;
- Senkung des Verbrauchs an Schlackebildnem, da nicht pro Schmelze abgeschlackt wird;
- Senkung des spezifischen Sauerstoffverbrauchs zur Entkohlung;
- Senkung des spezifischen Inertgasverbrauchs bzw. von Gasgemischen;
- Erhöhung der Lebensdauer des FF-Materials;
- Erhöhung der Lebensdauer der Sauerstoffdüsen und Spülsteine
- Verbesserung des Energiehaushaltes des Konverters.

Nachfolgend wird das Verfahren am Beispiel einer hochchromhaltigen Schmelze unter Minimierung der Chromoxidation und Rückgewinnung des metallischen Chroms beschrieben.

Das Verfahren wird in einem bekannten metallurgischen Gefäß, einem Konverter oder einer Vakuumanlage, mit Entkohlungsprozessen durch Einbringen von Sauerstoff, insbesondere Einblasen von Sauerstoff mit einer Lanze, durchgeführt.

Bei dem Blasvorgang mit Sauerstoff und Dissoziation des Sauerstoffs im Bad findet aufgrund der Mengenverhältnisse der Elemente Chrom (mehr als 10 Masse-%) und Kohlenstoff (etwa 1 Masse-%) neben der Direktentkohlung auch eine Chromoxidation des metallischen Chroms statt.

{O₂} = 2 [O]

[C] + [O] = {CO}

2 [Cr] + 3 [O] = (Cr₂O₃)

Das sich bildende Chromoxid reichert sich auf einer Blasenoberfläche oder im Brennfleck an und wird mit dem in der Schmelze aufgelösten Kohlenstoff nach der folgenden Gleichung reduziert.

(Cr₂O₃) + 3 [C] = 2 [Cr] + 3 {CO}

Das metalische Chrom wird in die Schmelze zurück geführt und das Kohlenmonoxid in die Gasatmosphäre oberhalb der Schmelze abgeführt.

Diese Reduktion des Chromoxids läuft nur unvollständig ab, so dass eine Teilmenge des Cr₂O₃ in die Schlacke gelangt. Dieser Reduktionseffekt wird mit fortlaufender Entkohlung zunehmend abgeschwächt, da der Gehalt am Reduktionselement Kohlenstoff zeitlich abnimmt.

Nach der Erfindung wird nun durch das Durchführen von mehreren Entkohlungsprozessen durch Sauerstoffblasen hintereinander der Anteil des Chromoxids in der Schlacke mehr und mehr erhöht, bis die Schlacke an Chromoxid gesättigt, währenddessen einer weiteren Verschlackung von metallischem Chom entgegengewirkt wird. Die an Chromoxiden gesättigte Schlacke wird anschließend direkt mit insbesondere FeSi nach der folgenden Gleichung reduziert.

2 (Cr₂O₃) + 3 [Si] = 4 [Cr] + 3 (SiO₂)

Die Erfindung bezieht sich hierbei nicht nur auf die Rückgewinnung von metallischem Chrom, sondem auch auf alle anderen Legierungselemente, deren Verschlackung unerwünscht ist. Der Sauerstoff bei der Entkohlung kann neben einer Lanze auch durch Bodendüsen in das Behandlungsgefäß eingebracht werden.

## Patentansprüche

1. Verfahren zur Behandlung von legierten kohlenstoffhaltigen Eisenschmelzen zur Herstellung von Stahl,
wobei in einem metallurgischen Gefäß eine kohlenstoffhaltige Eisenschmelze einer Entkohlung durch Zugabe von Sauerstoff ausgesetzt wird und eine Tefimenge der metallischen Legierungselemente verschlackt,
wobei die Metallschmelze aus dem metallurgischen Gefäß abgezogen wird, währenddessen die Schlacke unreduziert im metallurgischen Gefäß verbleibt und anschließend das metallurgische Gefäß mit einer neuen Charge Eisenschmeize befüllt wird und erneut ein Entkohlungsprozess durchgeführt wird,
**dadurch gekennzeichnet,**
**dass** ohne Zwischenabschlacken die Schlacke zunehmend mit Metalloxiden, die während mindestens drei bis vier hintereinander ablaufender Entkohlungsprozesse der Schmelze anfallen, gesättigt wird, wodurch einer Verschlackung der metallischen Legierungselemente zunehmend entgegengewirkt wird.

2. Verfahren nach Anspruch 1,
**dadurch gekennzeichnet,**
**dass**, nachdem der Sättigungsgrad oder ein annähernder Sättigungsgrad der Schlacke erreicht ist, die Schlacke reduziert wird und erst dann abgeschlackt wird.

3. Verfahren nach Anspruch 1 oder 2,
**dadurch gekennzeichnet,**
**dass** während der Entkohlungsprozesse die Schlacke mit der Schmelze stark vermischt wird.

4. Verfahren nach einem der Ansprüche 1 bis 3,
**dadurch gekennzeichnet,**
**dass** bei einer chromhaltigen Stahlschmelze die Schlacke mit Chromoxiden, die während der Entkohlungsprozesse aufgrund der Unvollständigkeit der Chromreduktion durch Kohlenstoff entstehen, zunehmend gesättigt wird und nach Erreichen eines Sättigungsgrades oder eines annähernden Sättigungsgrades die Schlacke mit Reduktionsmitteln für Chromoxid, insbesondere FeSi, reduziert wird und dann die reduzierte Schlacke abgestochen wird.

5. Verfahren nach Anspruch 4,
**dadurch gekennzeichnet,**
**dass** aufgrund der Reduktion des Chromoxids in der Schlacke mit dem Kohlenstoff im Schmelzbad eine starke Rührwirkung entsteht.

## Claims

1. Method of treating alloyed iron smelts, which contain carbon, for the production of steel, wherein an iron smelt containing carbon is subjected to decarburisation in a metallurgical vessel by additional oxygen and a part quantity of the metallic alloy elements forms slag, wherein the metal smelt is withdrawn from the metallurgical vessel during which the slag remains in unreduced form in the metallurgical vessel and subsequently the metallurgical vessel is filled with a new charge of iron smelt and a decarburisation process is carried out again, **characterised in that** without intermediate deslagging the slag is increasingly saturated with metal oxides which arise during at least three to four successively elapsing decarburisation processes of the smelt, whereby slag-forming of the metallic alloy elements is counteracted to increasing extent.

2. Method according to claim 1, **characterised in that** after the saturation degree or an approximate saturation degree of the slag is reached the slag is reduced and only then deslagged.

3. Method according to claim 1 or 2, **characterised in that** during the decarburisation processes the slag is strongly mixed with the smelt.

4. Method according to one of claims 1 to 3, **characterised in that** in the case of a steel smelt containing chromium the slag is increasingly saturated with chromium oxides which arise during the decarburisation processes due to the incompleteness of chromium reduction by carbon and after attainment of a saturation degree or an approximate saturation degree the slag is reduced by reducing agents for chromium oxide, particularly FeSi, and then the reduced slag is tapped off.

5. Method according to claim 4, **characterised in that** a strong stirring effect occurs due to the reduction of the chromium oxide in the slag by the carbon in the smelt bath.

## Revendications

1. Procédé de traitement de bains de fer en fusion alliés contenant du carbone, en vue de la production d'acier, dans lequel
dans un récipient métallurgique, un bain de fer en fusion contenant du carbone est exposé à une décarburation par apport d'oxygène et une quantité partielle des éléments d'alliage métalliques se scorifie,
le bain de métal en fusion est soutiré hors du récipient métallurgique, tandis que les scories restent sans réduction dans le récipient métallurgique, et ensuite on remplit le récipient métallurgique avec une nouvelle charge de bain de fer en fusion, et on exécute de nouveau un processus de décarburation,
**caractérisé en ce que**
les scories sont saturées de plus en plus avec des oxydes métalliques qui se présentent pendant au moins trois à quatre processus de décarburation successifs, sans suppression intermédiaire des scories, grâce à quoi on s'oppose de plus en plus à une scorification des éléments d'alliage métalliques.

2. Procédé selon la revendication 1, **caractérisé en ce qu'**après avoir atteint le degré de saturation ou un degré de saturation approximatif des scories, les scories sont réduites et supprimées uniquement ensuite.

3. Procédé selon l'une ou l'autre des revendications 1 et 2, **caractérisé en ce que** pendant les processus de décarburation, les scories sont fortement mélangées avec le bain en fusion.

4. Procédé selon l'une des revendications 1 à 3, **caractérisé en ce que** pour un bain de métal en fusion contenant du chrome, les scories sont saturées de plus en plus avec des oxydes de chrome qui se forment pendant les processus de décarburation en raison de la réduction non complète du chrome par le carbone, et après avoir atteint le degré de saturation ou un degré de saturation approximatif des scories, les scories sont réduites avec des agents réducteurs pour l'oxyde de chrome, en particulier FeSi, et ensuite les scories réduites sont supprimées.

5. Procédé selon la revendication 4, **caractérisé en ce qu'**en raison de la réduction de l'oxyde de chrome dans les scories par le carbone, un effet d'agitation intense se produit dans le bain de fusion.
